(19) Europäisches Patentamt
European Patent Office
Office européen des brevets

(11) EP 3 760 994 A1

(12) **EUROPEAN PATENT APPLICATION**
published in accordance with Art. 153(4) EPC

(43) Date of publication:
**06.01.2021 Bulletin 2021/01**

(21) Application number: **19785620.6**

(22) Date of filing: **27.03.2019**

(51) Int Cl.:
***G01K 17/00*** *(2006.01)*

(86) International application number:
**PCT/JP2019/013147**

(87) International publication number:
**WO 2019/198504 (17.10.2019 Gazette 2019/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.04.2018 JP 2018075145**

(71) Applicant: **Panasonic Intellectual Property Management Co., Ltd.**
**Osaka-shi, Osaka 540-6207 (JP)**

(72) Inventors:
- **KITADE, Naoya**
  **Osaka-shi, Osaka 540-6207 (JP)**
- **IYODA, Makoto**
  **Osaka-shi, Osaka 540-6207 (JP)**

(74) Representative: **Eisenführ Speiser Patentanwälte Rechtsanwälte PartGmbB**
**Postfach 31 02 60**
**80102 München (DE)**

(54) **GENERATED-HEAT-QUANTITY MEASURING METHOD AND GENERATED-HEAT-QUANTITY MEASURING APPARATUS**

(57) A generated-heat-quantity measuring method of the present disclosure is a generated-heat-quantity measuring method that measures a generated heat quantity of a heat generating component mounted on a substrate. The generated-heat-quantity measuring method includes: measuring a first heat quantity transferred between a heat transfer component and the heat generating component, a first component temperature of the heat generating component, and a first substrate temperature of the substrate, the heat transfer component transferring heat to and from the heat generating component; calculating a first thermal resistance between the heat generating component and the substrate in accordance with the first heat quantity, the first component temperature, and the first substrate temperature; causing the heat generating component to generate heat and measuring a second component temperature of the heat generating component and a second substrate temperature of the substrate; and calculating a second heat quantity flowing from the heat generating component to the substrate in accordance with the second component temperature, the second substrate temperature, and the first thermal resistance.

FIG. 3

100
200
MEASURER
HEATER
HEATER CONTROLLER
HEAT FLOW SENSOR
HEAT FLOW MEASURER
T1
ELECTRONIC COMPONENT
TEMPERATURE MEASURER
Qb
T2
SUBSTRATE
COMPUTING UNIT
211
221
310
311
210
220
230
240
320
231
232

EP 3 760 994 A1

## Description

TECHNICAL FIELD

The present disclosure relates to a generated-heat-quantity measuring method and a generated-heat-quantity measuring apparatus for a heat generating component mounted on a substrate.

BACKGROUND ART

PTL 1 discloses a generated-heat-quantity detecting method capable of detecting the generated heat quantity of a heat generating component mounted on a substrate.

Citation List

Patent Literature

PTL 1: Unexamined Japanese Patent Publication No. 2013-228300

SUMMARY OF THE INVENTION

The present disclosure provides a generated-heat-quantity measuring method and a generated-heat-quantity measuring apparatus capable of measuring the heat quantity flowing from a heat generating component mounted on a substrate to the substrate with higher accuracy.

A generated-heat-quantity measuring method of the present disclosure is a generated-heat-quantity measuring method that measures a generated heat quantity of a heat generating component mounted on a substrate. The generated-heat-quantity measuring method includes: measuring a first heat quantity transferred between a heat transfer component and the heat generating component, a first component temperature of the heat generating component, and a first substrate temperature of the substrate, the heat transfer component transferring heat to and from the heat generating component; calculating a first thermal resistance between the heat generating component and the substrate in accordance with the first heat quantity, the first component temperature, and the first substrate temperature; causing the heat generating component to generate heat and measuring a second component temperature of the heat generating component and a second substrate temperature of the substrate; and calculating a second heat quantity flowing from the heat generating component to the substrate in accordance with the second component temperature, the second substrate temperature, and the first thermal resistance.

Further, the generated-heat-quantity measuring apparatus of the present disclosure is a generated-heat-quantity measuring apparatus that measures a generated heat quantity of a heat generating component mounted on a substrate, and includes a measuring unit, a computing unit, and a heat transfer component that transfers heat to and from the heat generating component. The measuring unit measures a first heat quantity transferred between the heat transfer component and the heat generating component, a first component temperature of the heat generating component, and a first substrate temperature of the substrate, and measures a second component temperature of the heat generating component and a second substrate temperature of the substrate when the heat generating component generates heat. The computing unit calculates a first thermal resistance between the heat generating component and the substrate in accordance with the first heat quantity, the first component temperature, and the first substrate temperature, and calculates a second heat quantity flowing from the heat generating component to the substrate in accordance with the second component temperature, the second substrate temperature, and the first thermal resistance.

The generated-heat-quantity measuring method and the generated-heat-quantity measuring apparatus of the present disclosure provide are capable of measuring the heat quantity flowing from the heat generating component mounted on the substrate to the substrate with higher accuracy.

BRIEF DESCRIPTION OF DRAWINGS

FIG. 1 is a schematic diagram showing generated-heat-quantity measuring apparatus 100 according to a first exemplary embodiment.

FIG. 2 is a schematic diagram showing a state when generated-heat-quantity measuring apparatus 100 according to the first exemplary embodiment calculates thermal resistance R12 between electronic component 310 and substrate 320.

FIG. 3 is a schematic diagram showing a state when generated-heat-quantity measuring apparatus 100 according to the first exemplary embodiment calculates heat transfer quantity Qb which is a heat quantity flowing from electronic component 310 to substrate 320 per unit time.

FIG. 4 is a flowchart for explaining an operation in which generated-heat-quantity measuring apparatus 100 according to the first exemplary embodiment calculates heat transfer quantity Qb which is a heat quantity flowing from electronic component 310 to substrate 320 per unit time.

FIG. 5 is a diagram for explaining measurement points when measuring the temperature of substrate 320 with thermocouple 232.

FIG. 6 is a schematic diagram showing generated-heat-quantity measuring apparatus 120 according to a second exemplary embodiment.

FIG. 7 is a schematic diagram showing generated-heat-quantity measuring apparatus 140 according to a fourth exemplary embodiment.

## DESCRIPTION OF EMBODIMENTS

Hereinafter, exemplary embodiments will be described in detail with reference to the drawings as appropriate. However, a detailed description more than necessary may be omitted. For example, a detailed description of a well-known matter or a redundant description regarding the substantially same configuration may be omitted. The reason for this is to avoid unnecessary redundancy of the following description and to help a person of ordinary skill in the art to achieve easy understanding.

Note that the attached drawings and the following description are provided for those skilled in the art to fully understand the present disclosure, and are not intended to limit the subject matter as described in the appended claims.

### (First exemplary embodiment)

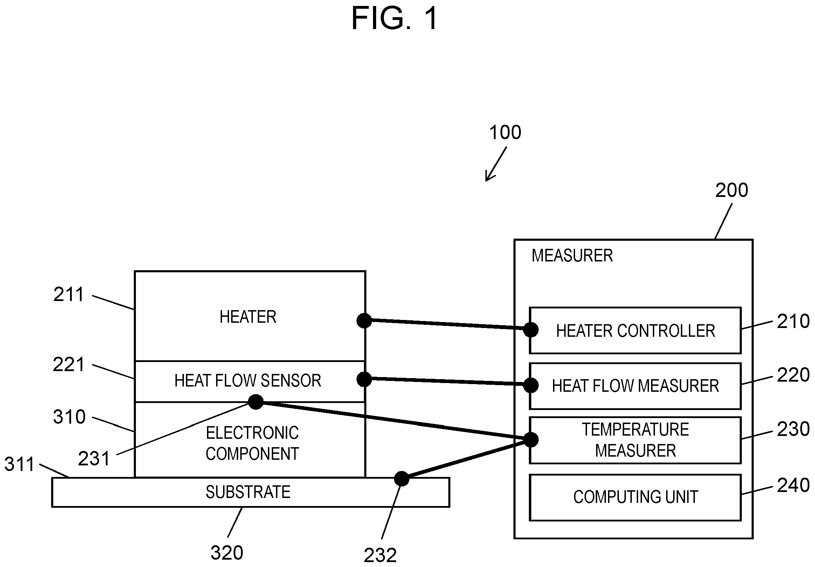

A first exemplary embodiment will be described below with reference to FIGS. 1 to 5.

### [1-1. Configuration]

FIG. 1 is a schematic diagram showing generated-heat-quantity measuring apparatus 100 according to the first exemplary embodiment. Generated-heat-quantity measuring apparatus 100 includes measurer 200, heater 211, heat flow sensor 221, thermocouple 231, and thermocouple 232.

Measurer 200 includes heater controller 210, heat flow measurer 220, temperature measurer 230, and computing unit 240. Heat flow measurer 220 and temperature measurer 230 are collectively referred to as a measuring unit.

Heater controller 210 is connected to heater 211. Heater 211 is a heating apparatus. Specifically, heater 211 is an apparatus that converts electric energy into heat energy. Heater 211 is connected to a power source, and a user can cause heater 211 to generate a desired heat quantity by operating heater controller 210.

Heat flow measurer 220 is connected to heat flow sensor 221. Heat flow sensor 221 is an apparatus that measures the heat quantity flowing to heat flow sensor 221. Specifically, it is a converter that generates an electrical signal proportional to the total heat quantity applied to the surface of the sensor. Heat flow measurer 220 receives the electric signal generated by heat flow sensor 221, and heat flow measurer 220 quantifies the heat quantity.

Temperature measurer 230 is connected to thermocouple 231 and thermocouple 232. In the present exemplary embodiment, temperature measurer 230 is connected to two thermocouples, thermocouple 231 and thermocouple 232, but may be connected to three or more thermocouples. Temperature measurer 230 quantifies the temperature of an object that is brought into contact with thermocouple 231 or thermocouple 232.

Computing unit 240 performs computation using the heat quantity quantified by heat flow measurer 220, the temperature quantified by temperature measurer 230, and other numerical values.

Electronic component 310 is a heat generating component. It is mounted on substrate 320 via mounting surface 311. Substrate 320 may be a rigid substrate or a flexible substrate. When a current flows through electronic component 310, electronic component 310 generates heat. Generated-heat-quantity measuring apparatus 100 according to the present exemplary embodiment measures the generated heat quantity of electronic component 310 by measuring the heat quantity flowing from electronic component 310 to substrate 320.

### [1-2. Operation]

The operation of generated-heat-quantity measuring apparatus 100 configured as described above will be described below. Generated-heat-quantity measuring apparatus 100 calculates the thermal resistance between electronic component 310 and substrate 320, and measures the generated heat quantity of electronic component 310.

[1-2-1. Calculation of thermal resistance]

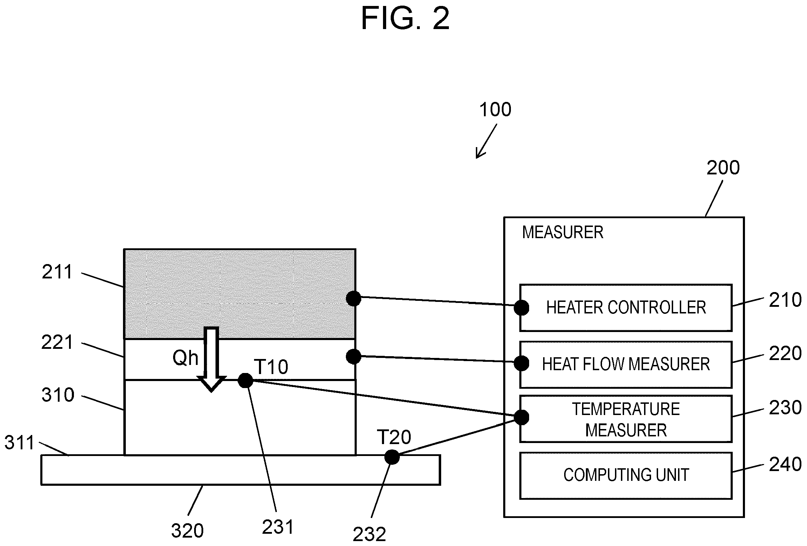

FIG. 2 is a schematic diagram showing a state when generated-heat-quantity measuring apparatus 100 according to the first exemplary embodiment calculates thermal resistance R12 between electronic component 310 and substrate 320.

First, the principle of calculating the thermal resistance between electronic component 310 and substrate 320 by generated-heat-quantity measuring apparatus 100 will be described.

The definition of thermal resistance Rxy between the x point and the y point is expressed by (Expression 1) where the temperature at the x point is temperature Tx, the temperature at the y point is temperature Ty, and the heat transfer quantity between the x and y points is heat transfer quantity Q.

[Expression 1]

$$Rxy = \frac{|Tx - T|}{Q}$$

When heater 211 is caused to generate heat without causing electronic component 310 to generate heat, the heat flows from heater 211 into electronic component 310 through heat flow sensor 221. Here, the heat quantity flowing into electronic component 310 from heater 211 per unit time is referred to as heat transfer quantity Qh.

Heat transfer quantity Qh can be measured by heat flow measurer 220 via heat flow sensor 221. Temperature T10 of electronic component 310 can be measured by temperature measurer 230 via thermocouple 231. Temperature T20 of substrate 320 can be measured by the temperature measurer 230 via thermocouple 232.

Therefore, the value of thermal resistance R12 between electronic component 310 and substrate 320 can be calculated according to (Expression 1) using heat transfer quantity Qh, temperature T10, and temperature T20. Thermal resistance R12 calculated here is used for calculation of generated heat quantity (detailed in [1-2-2. Calculation of generated heat quantity]).

[1-2-2. Calculation of generated heat quantity]

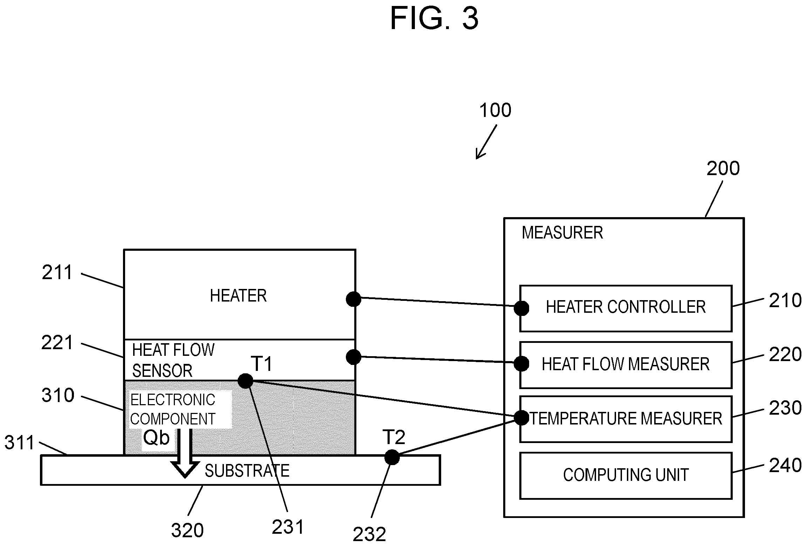

FIG. 3 is a schematic diagram showing a state when generated-heat-quantity measuring apparatus 100 according to the first exemplary embodiment calculates heat transfer quantity Qb which is a heat quantity flowing from electronic component 310 to substrate 320 per unit time.

Generated-heat-quantity measuring apparatus 100 according to the present exemplary embodiment can calculate the value of heat transfer quantity Qb as a heat quantity flowing from electronic component 310 to substrate 320 per unit time according to (Expression 1) using thermal resistance R12, temperature T1, and temperature T2.

When electronic component 310 is caused to generate heat without heater 211 being caused to generate heat, the heat flows into substrate 320 from electronic component 310. Here, the heat quantity flowing into substrate 320 from electronic component 310 per unit time is referred to as heat transfer quantity Qb.

As thermal resistance R12 between electronic component 310 and substrate 320, the thermal resistance used in [1-2-1. Calculation of thermal resistance] is used. Temperature T1 of electronic component 310 can be measured by heat flow sensor 221. Temperature T2 of substrate 320 can be measured by thermocouple 232.

Therefore, the value of heat transfer quantity Qb can be calculated according to (Expression 1) using thermal resistance R12, temperature T1, and temperature T2.

[1-2-3. Measuring method]

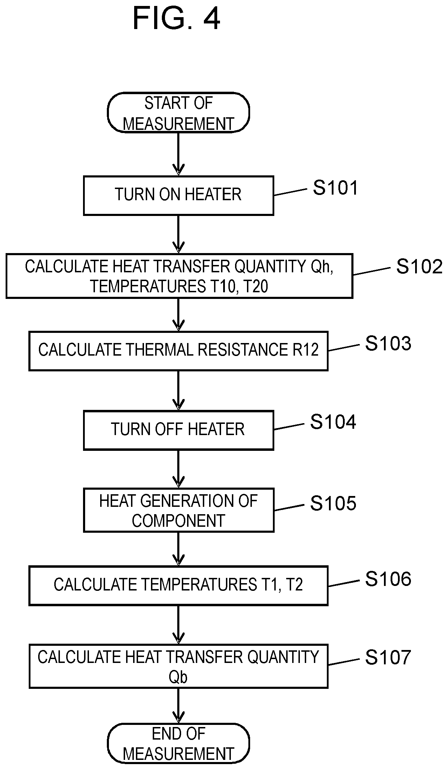

FIG. 4 is a flowchart for explaining an operation in which generated-heat-quantity measuring apparatus 100 according to the first exemplary embodiment calculates heat transfer quantity Qb.

The user operates heater controller 210 to cause heater 211 to generate heat (S101). Heater controller 210 may automatically cause heater 211 to generate heat. At this time, for example, when a current flows in electronic component 310 and electronic component 310 is generating heat, the current is stopped and the heat generation of electronic component 310 is stopped. Further, when the temperature of electronic component 310 is high, the temperature of electronic component 310 is lowered. Specifically, it is favorable that when heater 211 is caused to generate heat, the temperature of electronic component 310 be lowered to such an extent that heat flows into electronic component 310 from heater 211.

Heat flow sensor 221 measures heat transfer quantity Qh, thermocouple 231 measures temperature T10 of electronic component 310, and thermocouple 232 measures temperature T20 of substrate 320 (S102).

Computing unit 240 calculates the value of thermal resistance R12 according to (Expression 1) using heat transfer quantity Qh, temperature T10, and temperature T20 measured in step S102 (S103). The computation may be performed by the user separately using a computation means instead of computing unit 240.

The user operates heater controller 210 to stop the heat generation of heater 211 (S105). Heater controller 210 may automatically stop the heat generation of heater 211.

The user supplies a current to electronic component 310 to cause electronic component 310 to generate heat (S105). A controller may be connected to electronic component 310, and the controller may automatically supply a current to electronic component 310 to cause electronic component 310 to generate heat.

Thermocouple 231 measures temperature T1 of electronic component 310, and thermocouple 232 measures temperature T2 of substrate 320 (S106). At this time, heat flow sensor 221 may measure at least a part of the heat transfer quantity flowing from the surface of electronic component 310 other than mounting surface 311. Specifically, heat flow sensor 221 may measure heat transfer quantity Qa flowing from electronic component 310 toward heater 211.

Computing unit 240 calculates the value of heat transfer quantity Qb according to (Expression 1) using thermal resistance R12 measured in step S103 and temperatures T1 and T2 measured in step S106 (S107). Further, heat transfer quantity Qa and heat transfer quantity Qb may be added together to calculate heat transfer quantity Q which is the generated heat quantity of electronic component 310 per unit time. The computation may be performed by the user separately using a computation means instead of computing unit 240.

In the flowchart of FIG. 4, step S103 of calculating thermal resistance R12 is performed immediately after step S102 of measuring heat transfer quantity Qh, temperature T10, and temperature T20, but may be performed after step S106 of measuring temperature T1 and temperature T2. That is, the order of steps is step S101, step S102, step S104, step S105, step S106, step S103, and step S107. Here, step S103 is performed before step S107 of calculating heat transfer quantity Qb.

In the order of steps in the preceding paragraph, step S106 of measuring temperature T1 and temperature T2 is performed after step S102 of measuring heat transfer quantity Qh, temperature T10, and temperature T20, but may be performed before step S102 of measuring heat transfer quantity Qh, temperature T10, and temperature T20. That is, the order of steps is step S104, step S105, step S106, step S101, step S102, step S103, and step S107. Here, step S104 is performed before step S106 of measuring temperature T1 and temperature T2.

[1-2-4. Other]

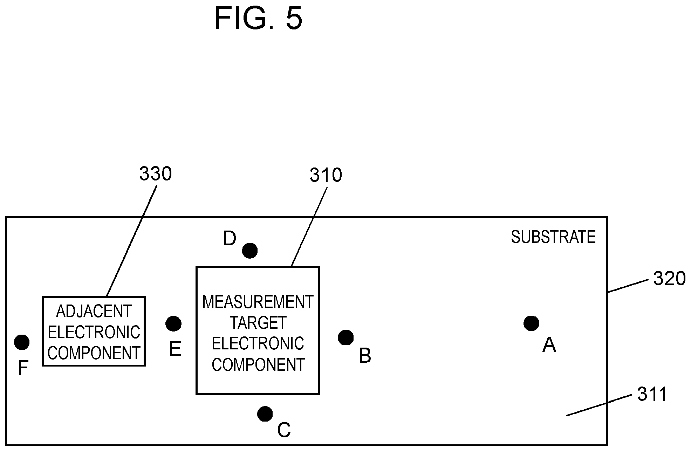

FIG. 5 is a diagram for explaining measurement points when measuring the temperature of substrate 320 with thermocouple 232. On substrate 320, electronic component 310 whose generated heat quantity is to be measured and electronic component 330 which is mounted adjacently are mounted. When a current flows through electronic component 330, electronic component 330 generates heat. In this way, when there is one or more heating elements (electronic component 330 in FIG. 5) in addition to electronic component 310 whose generated heat quantity is to be measured, it is preferable that no other heating element be located between electronic component 310 and the measurement point at which the temperature of substrate 320 is measured by thermocouple 232 because the measurement accuracy is improved. Specifically, point F in FIG. 5 is a measurement point at which another heating element is located with respect to electronic component 310. On the other hand, point A, point B, point C, point D, and point E in FIG. 5 are measurement points at which no other heating element is located with respect to electronic component 310 and are preferable measurement points because the measurement accuracy is improved.

[1-3. Effects and the like]

As described above, the generated-heat-quantity measuring method of the present exemplary embodiment is a method of measuring generated heat quantity Q of electronic component 310 mounted on substrate 320. The generated-heat-quantity measuring method includes providing electronic component 310 and heater 211 (an example of a heat transfer component) that transfers heat, and measuring heat transfer quantity Qh (an example of a first heat quantity) that flows into electronic component 310 from heater 211, temperature T10 (an example of a first component temperature) of electronic component 310, and temperature T20 (an example of a first substrate temperature) of substrate 320, using heat transfer quantity Qh, temperature T10, and temperature T20 to calculate thermal resistance R12 (an example of a first thermal resistance) between electronic component 310 and substrate 320, causing electronic component 310 to generate heat and measuring temperature T1 (an example of a second component temperature) of electronic component 310 and temperature T2 (an example of a second substrate temperature) of substrate 320, and using temperature T1, temperature T2, and thermal resistance R12 to calculate heat transfer quantity Qb (an example of a second heat quantity) flowing from electronic component 310 to substrate 320.

Further, in the present exemplary embodiment, generated-heat-quantity measuring apparatus 100 is an apparatus that measures generated heat quantity Q of electronic component 310 mounted on substrate 320, and includes a measurer 200, computing unit 240, and heater 211 that transfers heat with respect to electronic component 310. Measurer 200 measures heat transfer quantity Qh flowing into electronic component 310 from heater 211, temperature T10 of electronic component 310, and temperature T20 of substrate 320, and, when electronic component 310 is generating heat, measures temperature T1 of electronic component 310 and temperature T2 of substrate 320. Computing unit 240 calculates thermal resistance R12 between electronic component 310 and substrate 320 by using heat transfer quantity Qh, temperature T10, and temperature T20, and calculates heat transfer quantity Qb flowing from electronic component 310 to substrate 320 using temperature T1, temperature T2, and thermal resistance R12.

As a result, it is possible to measure the heat quantity flowing from the heat generating component mounted on the substrate to the substrate, even though the heat flow sensor cannot be disposed between the heat generating component and the substrate.

Further, in the generated-heat-quantity measuring method of the present exemplary embodiment, a heating element is not located between electronic component 310 and the measurement point of temperature T2.

Thus, the heat quantity flowing from the heat generating component mounted on the substrate to the substrate can be measured more accurately.

Further, in the generated-heat-quantity measuring method of the present exemplary embodiment, in measuring temperature T1 and temperature T2, heat transfer quantity Qa (an example of a third heat quantity) which is at least a part of the heat quantity flowing from other than the surface of electronic component 310 facing substrate 320 is further measured.

Thus, in addition to the heat quantity flowing from the heat generating component mounted on the substrate to the substrate, a part of the heat quantity flowing from other than the surface facing the substrate can also be measured.

Further, the generated-heat-quantity measuring method of the present exemplary embodiment calculates generated heat quantity Q of electronic component 310 using heat transfer quantity Qb flowing from electronic component 310 to substrate 320 and heat transfer quantity Qa.

Thus, the generated heat quantity of the heat generating component mounted on the substrate to the substrate can be measured more accurately. When the generated heat quantity of the heat generating component can be measured, the generated heat quantity of the entire product in which the heat generating component is mounted can be calculated, which is useful for designing a heat radiation mechanism of the product or the like.

Further, in the generated-heat-quantity measuring method according to the present exemplary embodiment, heater 211 is a heat generator.

Thus, the heat quantity flowing from the heat generating component mounted on the substrate to the substrate can be measured more accurately.

Further, in the generated-heat-quantity measuring method according to the present exemplary embodiment, temperature T20 and temperature T2 are measured by thermocouple 232.

Thus, the temperature of the substrate can be measured more accurately.

(Second exemplary embodiment)

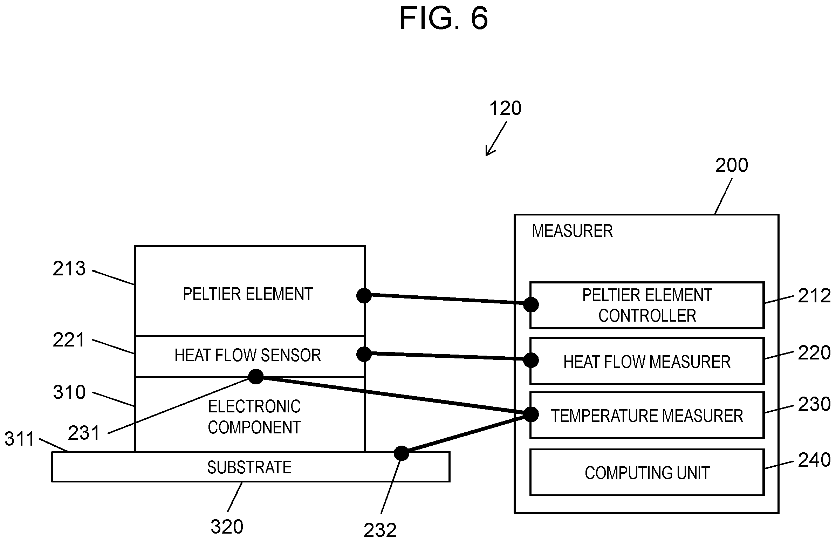

A second exemplary embodiment will be described below with reference to FIG. 6.

FIG. 6 is a schematic diagram showing generated-heat-quantity measuring apparatus 120 according to the second exemplary embodiment. Peltier element 213 (an example of a heat transfer component) may be used in place of heater 211 in generated-heat-quantity measuring apparatus 100 according to the first exemplary embodiment. Peltier element 213 is a heat absorbing element (heat absorber). Instead of heater controller 210, Peltier element controller 212 that controls the Peltier element is used. When Peltier element 213 is used instead of heater 211, Peltier element 213 absorbs heat from electronic component 310. Heat transfer quantity Qh, which is absorbed heat quantity per unit time, is treated as a negative value.

As described above, the generated-heat-quantity measuring method by the generated-heat-quantity measuring apparatus 120 of the present exemplary embodiment uses Peltier element 213 instead of heater 211 and uses Peltier element controller 212 that controls the Peltier element instead of heater controller 210. This is the difference from the generated-heat-quantity measuring method by generated-heat-quantity measuring apparatus 100 of the first exemplary embodiment. It is the same as the generated-heat-quantity measuring method by generated-heat-quantity measuring apparatus 100 in the other respect. That is, after Peltier element controller 212 operates Peltier element 213, heat flow measurer 220 measures heat transfer quantity Qh, and temperature measurer 230 measures temperature T10 of electronic component 310 and temperature T20 of substrate 320. Computing unit 240 calculates thermal resistance R12 using heat transfer quantity Qh, temperature T10, and temperature T20. Next, Peltier element controller 212 stops Peltier element 213, and temperature measurer 230 measures temperature T1 of electronic component 310 and temperature T2 of substrate 320 while the user supplies a current to electronic component 310 to cause electronic component 310 to be generating heat. Computing unit 240 calculates the value of heat transfer quantity Qb using thermal resistance R12 and temperatures T1 and T2.

Thus, the heat quantity flowing from the heat generating component mounted on the substrate to the substrate can be measured more accurately.

(Third exemplary embodiment)

A third exemplary embodiment will be described below.

In generated-heat-quantity measuring method according to the first exemplary embodiment, heater 211 is caused to generate heat and temperature T20 of substrate 320 is measured in a state where electronic component 310 is not caused to generate heat, but the temperature of substrate 320 may be measured at a plurality of points. For multi-point measurement, the generated-heat-quantity measuring apparatus according to the third exemplary embodiment may include one or more other thermocouples in addition to thermocouple 231 and thermocouple 232. At this time, for example, using thermocouple 232 and three other thermocouples, temperatures T20, T30, T40, T50 of substrate 320 at a plurality of measurement points B, C, D, E shown in FIG. 5 are measured, respectively. Then, thermal resistance R12 between electronic component 310 and the measurement point of temperature T20 of substrate 320, thermal resistance R13 between electronic component 310 and the measurement point of temperature T30 of substrate 320, thermal resistance R14 between electronic component 310 and the measurement point of temperature T40 of substrate 320, and thermal resistance R15 between electronic component 310 and the measurement point of temperature T50 of substrate 320 are determined. When heat transfer quantity Qh and temperatures T20, T30, T40, T50 are used, thermal resistances R12, R13, R14, R15 are obtained by (Expression 1).

In addition to temperature T1 of electronic component 310, temperatures T2, T3, T4, T5 are measured at a plurality of measurement points on substrate 320 in a state where heater 211 stops heating and electronic component 310 is caused to generate heat. Then, using thermal resistances R12, R13, R14, R15 and temperatures T1, T2, T3, T4, T5, the heat transfer quantity corresponding to each measurement point is calculated by the generated-heat-quantity measuring method according to the first exemplary embodiment. It is sufficient if the final value of heat transfer quantity Qb is obtained by using an average value of the plurality of heat transfer quantities obtained or by calculating an appropriate value by least-squares method.

As described above, the generated-heat-quantity measuring method according to the present exemplary embodiment measures the temperature of substrate 320 at a plurality of measurement points and calculates the thermal resistance between the measurement points and electronic component 310.

Thus, the heat quantity flowing from the heat generating component mounted on the substrate to the substrate can be measured more accurately.

(Fourth exemplary embodiment)

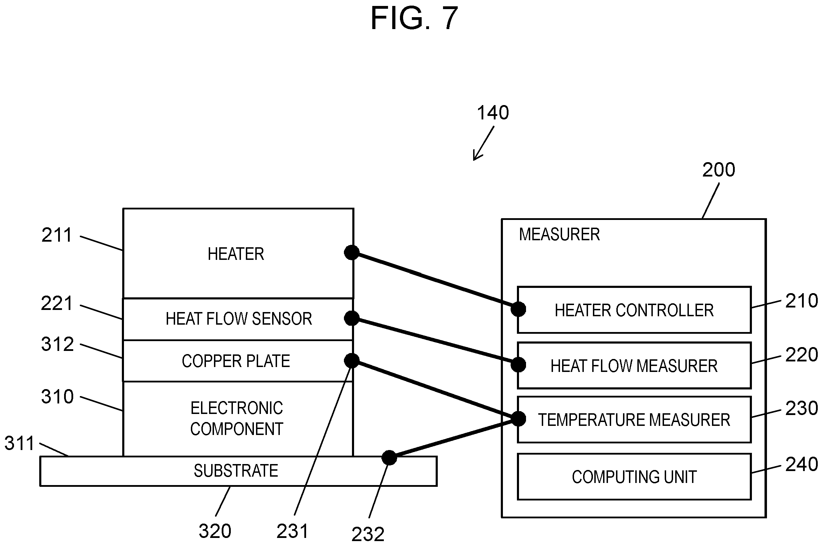

A fourth exemplary embodiment will be described below with reference to FIG. 7.

FIG. 7 is a schematic diagram showing generated-heat-quantity measuring apparatus 140 according to the fourth exemplary embodiment. In generated-heat-quantity measuring apparatus 140, copper plate 312 is disposed between heat flow sensor 221 and electronic component 310. Copper plate 312 is brought into contact with electronic component 310, and temperature measurer 230 measures the temperature of copper plate 312 with thermocouple 231. In the generated-heat-quantity measuring method by generated-heat-quantity measuring apparatus 140, heat transfer quantity Qb is calculated by using the measured temperature of copper plate 312 as temperature T10 and temperature T1 of electronic component 310. When copper plate 312 is brought into contact with the upper surface of electronic component 310, a value close to the average temperature of the upper surface of electronic component 310 can be measured.

As described above, the generated-heat-quantity measuring method by generated-heat-quantity measuring apparatus 140 in the present exemplary embodiment differs from generated-heat-quantity measuring apparatus 100 of the first exemplary embodiment in that copper plate 312 is brought into contact with electronic component 310 and the temperature of copper plate 312 is set to temperature T10 or temperature T1. It is the same as the generated-heat-quantity measuring method by generated-heat-quantity measuring apparatus 100 of the first exemplary embodiment in the other respect, and description will be omitted.

Thus, the temperature of the heat generating component can be measured more accurately.

(Fifth exemplary embodiment)

A fifth exemplary embodiment will be described below.

In the generated-heat-quantity measuring method according to the first exemplary embodiment, temperature T20 and temperature T2 of substrate 320 may be measured by a non-contact thermometer.

As described above, in the generated-heat-quantity measuring method according to the present exemplary embodiment, temperature T20 and temperature T2 of substrate 320 are measured by a non-contact thermometer. It is the same as the generated-heat-quantity measuring method by generated-heat-quantity measuring apparatus 100 of the first exemplary embodiment in the other respect, and description will be omitted.

Thus, the measurement can be performed without bringing the thermocouple into contact with the substrate.

(Other exemplary embodiments)

As described above, the first to fifth exemplary embodiments have been described as examples of the technology disclosed in the present application. However, the technology in the present disclosure is not limited to the above, but can be applied to an exemplary embodiment in which change, replacement, addition, omission, or the like have been made. Further, it is also possible to form a new exemplary embodiment by combining the constituent elements described in the above-mentioned first to fifth exemplary embodiments.

Therefore, other exemplary embodiments will be described below.

Heater 211 (or Peltier element 213) and heat flow sensor 221 are located above electronic component 310 in the first to fifth exemplary embodiments, but may be located laterally to electronic component 310. Also, when heater 211 (or Peltier element 213) and heat flow sensor 221 are located laterally to electronic component 310, it is favorable that heat flow sensor 221 be located between heater 211 (or Peltier element 213) and electronic component 310.

In the first exemplary embodiment, when heater 211 is caused to generate heat, the temperature is raised to such an extent that the heat flows into electronic component 310 from heater 211 in step S101, but there is also a method of not raising the temperature. When the heat flows from electronic component 310 to heater 211 even when heater 211 is caused to generate heat, it is sufficient if the size of the heat quantity flowing from electronic component 310 to heater 211 per unit time is set to a negative value and set as the value of heat transfer quantity Qh.

In the first to fifth exemplary embodiments, both the calculation of thermal resistance R12 and the calculation of heat transfer quantity Qb are performed, but only one may be performed. In cases where the value of thermal resistance R12 is to be determined and the value of heat transfer quantity Qb is not to be determined or determined by another method, it is sufficient if only thermal resistance R12 is calculated. Further, when thermal resistance R12 is known or can be known by another method, it is sufficient if only heat transfer quantity Qb is calculated. When only calculating thermal resistance R12, steps S104, S105, S106, S107 may be omitted. When only calculating heat transfer quantity Qb, steps S101, S102, S103 may be omitted.

It should be noted that the above-described exemplary embodiments are intended to exemplify the technology of the present disclosure, and thus various changes, replacements, additions, omissions, and the like can be made within the scope of the claims or the scope equivalent thereto.

INDUSTRIAL APPLICABILITY

The present disclosure can be applied to a method of measuring a generated heat quantity.

REFERENCE MARKS IN THE DRAWINGS

| | |
|---|---|
| 100, 120, 140: | generated-heat-quantity measuring apparatus |
| 200: | measurer |
| 210: | heater controller |
| 211: | heater |
| 212: | Peltier element controller |
| 213: | Peltier element |
| 220: | heat flow measurer |
| 221: | heat flow sensor |
| 230: | temperature measurer |
| 231, 232: | thermocouple |
| 240: | computing unit |
| 310: | electronic component |
| 311: | mounting surface |
| 312: | copper plate |
| 320: | substrate |
| 330: | electronic component |

## Claims

1. A generated-heat-quantity measuring method for measuring a generated heat quantity of a heat generating component mounted on a substrate, the method comprising:

   measuring a first heat quantity transferred between a heat transfer component and the heat generating component, a first component temperature of the heat generating component, and a first substrate temperature of the substrate, the heat transfer component transferring heat to and from the heat generating component;
   calculating a first thermal resistance between the heat generating component and the substrate in accordance with the first heat quantity, the first component temperature, and the first substrate temperature;
   causing the heat generating component to generate heat and measuring a second component temperature of the heat generating component and a second substrate temperature of the substrate; and
   calculating a second heat quantity flowing from the heat generating component to the substrate in accordance with the second component temperature, the second substrate temperature, and the first thermal resistance.

2. The generated-heat-quantity measuring method according to claim 1, wherein a heating element is not located between the heat generating component and a measurement point of the second substrate temperature.

3. The generated-heat-quantity measuring method according to claim 1 or 2, wherein in the measuring of the second component temperature and the second substrate temperature, a third heat quantity that is at least a part of a heat quantity flowing from other than a surface of the heat generating component facing the substrate is further measured.

4. The generated-heat-quantity measuring method according to claim 3, further comprising:
   calculating a generated heat quantity of the heat generating component, using the second heat quantity flowing from the heat generation component to the substrate, and the third heat quantity.

5. The generated-heat-quantity measuring method according to any one of claims 1 to 4, wherein the heat transfer component is a heat generator or a heat absorber.

6. The generated-heat-quantity measuring method according to any one of claims 1 to 5, wherein each of the first substrate temperature and the second substrate temperature is measured at a plurality of points.

7. The generated-heat-quantity measuring method according to any one of claims 1 to 6, wherein the first component temperature or the second component temperature is a temperature of a copper plate measured by bringing the copper plate into contact with the heat generating component.

8. The generated-heat-quantity measuring method according to any one of claims 1 to 7, wherein the first component temperature, the second component temperature, the first substrate temperature, and the second substrate temperature are measured by a thermocouple thermometer.

9. The generated-heat-quantity measuring method according to any one of claims 1 to 7, wherein
   the first component temperature and the second component temperature are measured by a thermocouple thermometer, and
   the first substrate temperature and the second substrate temperature are measured by a non-contact thermometer.

10. A generated-heat-quantity measuring apparatus for measuring a generated heat quantity of a heat generating component mounted on a substrate, the apparatus comprising:

    a measuring unit;
    a computing unit; and
    a heat transfer component configured to transfer heat to and from the heat generating component, wherein
    the measuring unit

      measures a first heat quantity transferred between the heat transfer component and the heat generating component, a first component temperature of the heat generating component, and a first substrate temperature of the substrate, and
      measures a second component temperature of the heat generating component and a second substrate temperature of the substrate when the heat generating component generates heat, and the computing unit

calculates a first thermal resistance between the heat generating component and the substrate in accordance with the first heat quantity, the first component temperature, and the first substrate temperature, and
calculates a second heat quantity flowing from the heat generating component to the substrate in accordance with the second component temperature, the second substrate temperature, and the first thermal resistance.

**11.** The generated-heat-quantity measuring apparatus according to claim 10, wherein a heating element is not located between the heat generating component and a measurement point of the second substrate temperature.

**12.** The generated-heat-quantity measuring apparatus according to claim 10 or 11, wherein the measuring unit further measures a third heat quantity that is at least a part of a heat quantity flowing from other than a surface of the heat generating component facing the substrate when the heat generating component generates heat.

**13.** The generated-heat-quantity measuring apparatus according to claim 12, wherein the computing unit calculates a generated heat quantity of the heat generating component using the second heat quantity flowing from the heat generation component to the substrate, and the third heat quantity.

**14.** The generated-heat-quantity measuring apparatus according to any one of claims 10 to 13, wherein the heat transfer component is a heat generator or a heat absorber.

**15.** The generated-heat-quantity measuring apparatus according to any one of claims 10 to 14, wherein the measuring unit measures each of the first substrate temperature and the second substrate temperature at a plurality of points.

**16.** The generated-heat-quantity measuring apparatus according to any one of claims 10 to 15, wherein the first component temperature or the second component temperature is a temperature of a copper plate measured by bringing the copper plate into contact with the heat generating component.

**17.** The generated-heat-quantity measuring apparatus according to any one of claims 10 to 16, wherein the measuring unit includes a thermocouple thermometer and measures the first component temperature, the second component temperature, the first substrate temperature, and the second substrate temperature by the thermocouple thermometer.

**18.** The generated-heat-quantity measuring apparatus according to any one of claims 10 to 16, wherein
the measuring unit includes a thermocouple thermometer and a non-contact thermometer,
the first component temperature and the second component temperature are measured by the thermocouple thermometer, and
the first substrate temperature and the second substrate temperature are measured by the non-contact thermometer.

FIG. 1
100
200
MEASURER
210
HEATER CONTROLLER
220
HEAT FLOW MEASURER
230
TEMPERATURE MEASURER
240
COMPUTING UNIT
HEATER
HEAT FLOW SENSOR
ELECTRONIC COMPONENT
SUBSTRATE
211
221
310
231
311
320
232

FIG. 2

100
200
MEASURER
HEATER CONTROLLER
HEAT FLOW MEASURER
TEMPERATURE MEASURER
COMPUTING UNIT
210
220
230
240
T20
232
T10
231
Qh
320
211
221
310
311

FIG. 3

100
200
MEASURER
210
HEATER CONTROLLER
220
HEAT FLOW MEASURER
230
TEMPERATURE MEASURER
240
COMPUTING UNIT
HEATER
HEAT FLOW SENSOR
ELECTRONIC COMPONENT
Qb
T1
T2
SUBSTRATE
211
221
310
311
320
231
232

FIG. 4

START OF MEASUREMENT
TURN ON HEATER
S101
CALCULATE HEAT TRANSFER QUANTITY Qh, TEMPERATURES T10, T20
S102
CALCULATE THERMAL RESISTANCE R12
S103
TURN OFF HEATER
S104
HEAT GENERATION OF COMPONENT
S105
CALCULATE TEMPERATURES T1, T2
S106
CALCULATE HEAT TRANSFER QUANTITY Qb
S107
END OF MEASUREMENT

FIG. 5

320
311
SUBSTRATE
A
B
310
C
MEASUREMENT TARGET ELECTRONIC COMPONENT
D
E
330
ADJACENT ELECTRONIC COMPONENT
F

120
200
MEASURER
PELTIER ELEMENT CONTROLLER
HEAT FLOW MEASURER
TEMPERATURE MEASURER
COMPUTING UNIT
212
220
230
240
PELTIER ELEMENT
HEAT FLOW SENSOR
ELECTRONIC COMPONENT
SUBSTRATE
213
221
310
231
311
232
320

FIG. 6

FIG. 7

140
200
MEASURER
HEATER CONTROLLER
HEAT FLOW MEASURER
TEMPERATURE MEASURER
COMPUTING UNIT
210
220
230
240
HEATER
HEAT FLOW SENSOR
COPPER PLATE
ELECTRONIC COMPONENT
SUBSTRATE
211
221
312
310
311
320
231
232

## INTERNATIONAL SEARCH REPORT

International application No.
PCT/JP2019/013147

A. CLASSIFICATION OF SUBJECT MATTER
Int.Cl. G01K17/00(2006.01)i

According to International Patent Classification (IPC) or to both national classification and IPC

B. FIELDS SEARCHED

Minimum documentation searched (classification system followed by classification symbols)
Int.Cl. G01K1/00-19/00, G01N25/18, 25/20

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2002-14065 A (MEIDENSHA CORPORATION) 18 January 2002, paragraphs [0019]-[0032], fig. 1-4 (Family: none) | 1-3, 5-6, 8-12, 14-15, 17-18<br>7, 16<br>4, 13 |
| Y | JP 2003-161658 A (MALCOM CO., LTD.) 06 June 2003, paragraph [0015] (Family: none) | 7, 16 |
| A | JP 2004-361197 A (MEIDENSHA CORPORATION) 24 December 2004 (Family: none) | 1-18 |
| A | JP 64-13445 A (FUJITSU LTD.) 18 January 1989 (Family: none) | 1-18 |
| A | JP 2013-228300 A (THERMAL DESIGN LABORATORY CO., LTD.) 07 November 2013 (Family: none) | 1-18 |

☐ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 June 2019 (19.06.2019) | 02 July 2019 (02.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013228300 A